# EUROPEAN PATENT APPLICATION

(11) **EP 4 574 334 A1**
(43) Date of publication of application: **25.06.2025**
(21) Application number: 23218698.1
(22) Date of filing: 20.12.2023
(51) Int. Cl.: B23Q 15/00, B23Q 17/22, G05B 19/402

(54) **MACHINE TOOL AND METHOD FOR POSITIONING A TOOL BODY OF A MACHINE TOOL**

(71) Applicant: AB Sandvik Coromant, 811 81 Sandviken (SE)
(72) Inventor: ÖSTLING, Dan, 811 81 Sandviken (SE); Vedeld, Roger, 811 81 Sandviken (SE); TJOMSLAND, Mathias, 811 81 Sandviken (SE)
(74) Representative: Sandvik

(57) **Abstract**

A method for positioning of a tool body of a machine tool in preparation for a machining operation comprises reading (S20) outputs from at least one force sensor of a sensor arrangement configured for sensing deflection forces applied to the tool body. The tool body is displaced (S30) in response to the read outputs from the force sensor(s). The displacing comprises displacing of the tool body in a first direction as a response to a component in a second direction of a deflection force applied on the tool body by an operator.

## Description

### TECHNICAL FIELD

The present technology relates in general to methods and systems for positioning a tool body, and in particular for positioning of a tool body of a machine tool in preparation for a machining operation.

### BACKGROUND

In manufacturing, workpieces are machined in machining systems in order to create finished articles. The machining system typically comprises a machine tool having a tool body, e.g. a tool bar, at which e.g. a cutting head or the like is attached. As a preparation before the actual machining operation, the tool body is moved relative to the workpiece to position the cutting tool in close proximity of the workpiece. Such operations are typically performed by manually controlling a positioning of the tool body by an operator, mainly supported by visual observations of the operator.

For machining of inner surfaces of a workpiece, e.g. the inner surface of a cylinder, the tool body is, as a preparation for the machining operation, moved along the axis of the cylinder into the interior thereof, as well as being moved radially in order to bring the cutting tool in close proximity of the inner surface. In order to control the movements of the tool body based on visual observations, the operator has to be standing close to the workpiece, not seldom in somewhat awkward positions in order to view the movements. The control of the movements is typically performed using a control unit with buttons or other maneuvering means for initiating different movements of the tool body. The control unit is often made small and portable in order for the operator to be able to use the control unit while observing the tool body.

However, even if the control unit is small and portable, the handling of the control unit typically requires both hands of the operator and is often difficult to perform at the same time as observing the position of the tool body. Consequently, there exists a need for improvement when it comes to positioning of a tool body of a machine tool in preparation for a machining operation.

### SUMMARY

It is an object of the present technology to address at least some of the problems and issues outlined above. One object of embodiments is to facilitate the positioning of a tool body of a machine tool in preparation for a machining operation.

The above object is achieved by methods and devices according to the independent claims. Preferred embodiments are defined in dependent claims.

In general words, in a first aspect, a method for positioning of a tool body of a machine tool in preparation for a machining operation comprises reading outputs from at least one force sensor of a sensor arrangement configured for sensing deflection forces applied to the tool body. The tool body is displaced in response to the read outputs from the force sensor(s). The displacing comprises displacing of the tool body in a first direction as a response to a component in a second direction of a deflection force applied on the tool body by an operator. Using force sensors, for example provided at the tool body or the tool holder, enables an operator to use the tool body itself as a maneuvering means for positioning of the tool body. The force sensors may be different kinds of strain sensors, such as e.g. a strain gauge, for example a resistive foil strain gauge or a semiconductor strain gauge.

The directions can be configured in different ways. In one embodiment, the second direction is parallel to the first direction. In other words, the tool body may be moved in the same direction as the force applied to it.

In one embodiment, the first direction is perpendicular to an axial direction of the tool body.

In one embodiment, the second direction is a radial direction relative to a rotation axis of a workpiece.

These principles can be extended in more dimensions. In one embodiment, the displacing further comprises displacing of the tool body in a third direction, transversal with respect to the first direction, as a response to a component in a fourth direction, transversal with respect to the second direction, of the deflection force applied on the tool body. This opens up for movements in two different directions, which can be combined in various ways.

In one embodiment, the second and fourth directions are mutually perpendicular. In one embodiment, the second and fourth directions are perpendicular to an axial direction of the tool body. In one embodiment, the fourth direction is a tangential direction relative to a rotation axis of a workpiece. In one embodiment, the first and third directions are mutually perpendicular. In one embodiment, the third direction is parallel to an axial direction of said tool body.

The magnitude of the applied force can also be utilized. In one embodiment, a displacement velocity of a respective one of said displacements is a predetermined function of a magnitude of a respective deflection force component strength. In one embodiment, the displacements are performed if the magnitude of the respective deflection force component strength exceeds a predetermined threshold. In a further embodiment, the displacement velocity of a respective one of the displacements is proportional to a difference between the magnitude of the respective deflection force component strength and the predetermined threshold.

Also the timing of the force application can be used, by detecting acceleration measures. In one embodiment, the method further comprises reading outputs from at least one accelerometer of the sensor arrangement configured for sensing acceleration applied to the tool body. From the read outputs from the accelerometer(s) it is deduced if a predetermined pattern of a sequence of tapping on said tool body is present. The tool body is displaced in predetermined steps in response to the deduced predetermined pattern of the sequence of tapping.

Alternatively, if a predetermined function is used, outputs from at least one accelerometer of the sensor arrangement configured for sensing acceleration applied to the tool body are read. From the read outputs from the accelerometer(s), it is deduced if a predetermined pattern of a sequence of tapping on the tool body is present. The predetermined function is adapted in response to the deduced predetermined pattern of the sequence of tapping.

In a second aspect, a machine tool comprises a tool body of a cutting tool, a sensor arrangement and a control system. The sensor arrangement comprises at least one force sensor configured for sensing deflection forces applied to the tool body. The control system is configured for controlling a position of the tool body in preparation for a machining operation. The control system is communicationally connected to the sensor arrangement for reading outputs of the force sensor(s). The control system is configured for displacing the tool body in a first direction as a response to a component in a second direction of a deflection force applied on the tool body by hand of an operator.

If movements in more than one direction is required, in one embodiment, the control system is further configured for displacing the tool body in a third direction, transversal with respect to the first direction, as a response to a component in a fourth direction, transversal with respect to the second direction, of the deflection force applied on the tool body.

In one embodiment, the sensor arrangement further comprises at least one accelerometer configured for sensing acceleration applied to the tool body. The control system is then communicationally connected to the sensor arrangement for reading outputs of the accelerometer(s). The control system is further configured for deducing, from the read outputs from the accelerometer(s), if a predetermined pattern of a sequence of tapping on the tool body is present. The control system is further configured for displacing the tool body in predetermined steps in response to the deduced predetermined pattern of the sequence of tapping.

In another embodiment, the sensor arrangement further comprises at least one accelerometer configured for sensing acceleration applied to the tool body. The control system is communicationally connected to the sensor arrangement for reading outputs of the accelerometer(s). The control system is further configured for deducing, from the read outputs from the accelerometer(s), if a predetermined pattern of a sequence of tapping on the tool body is present. The control system is further configured for adapting a predetermined displacement velocity function, being a function of a magnitude of a respective deflection force component strength, in response to the deduced predetermined pattern of the sequence of tapping.

One advantage with the proposed technology is that the tool body itself is used as a maneuvering means for adjustment of a position as a preparation for machining. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 is a schematic illustration of a machining system;
FIG. 2 is a schematic illustration of an embodiment of a machining system according to the presently presented technology;
FIG. 3 illustrates schematically a part of a tool body;
FIG. 4 illustrates schematically a cross-sectional view of a tool body;
FIGS. 5A-C and 6A-C illustrate different directions with respect of a tool body;
FIG. 7 is a flow diagram of steps of an embodiment of a method for positioning of a tool body of a machine tool in preparation for a machining operation;
FIG. 8 is a diagram illustrating an embodiment of a relation between force component strength and movement speed using a threshold;
FIG. 9 is a flow diagram of steps of another embodiment of a method for positioning of a tool body of a machine tool in preparation for a machining operation; and
FIG. 10 is a flow diagram of steps of yet another embodiment of a method for positioning of a tool body of a machine tool in preparation for a machining operation.

### DETAILED DESCRIPTION

Throughout the drawings, the same reference numbers are used for similar or corresponding elements.

For a better understanding of the proposed technology, it may be useful to begin with a brief overview of a typical machining system.

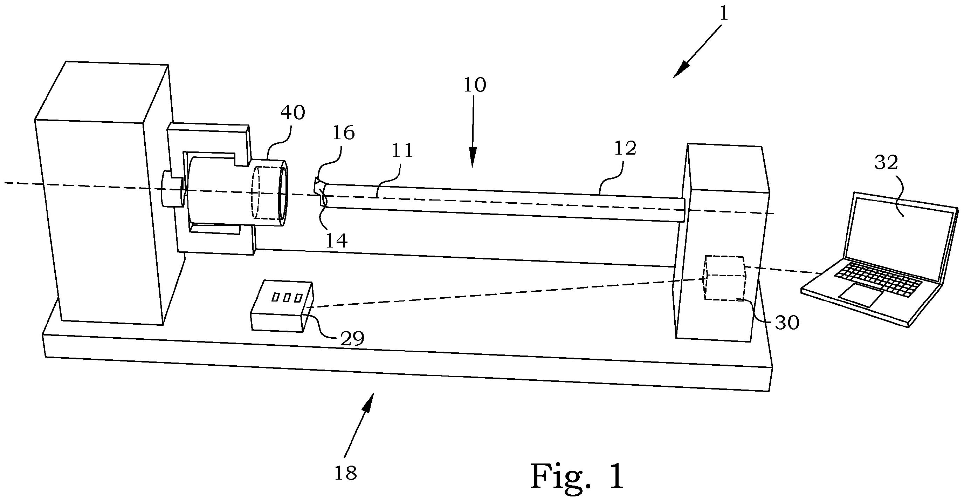

In Figure 1, a machining system 1 is schematically illustrated.

The machining system 1 comprises a cutting tool 10 and a control system 30 adapted for controlling and monitoring the position of the cutting tool 10. The cutting tool 10 comprises a tool body 12 and a cutting head 14 arranged at an end of the tool body 12. The cutting head 14 comprises a cutting edge 16, adapted for engagement with a workpiece 40 for cutting away material therefrom.

The control system 30, schematically illustrated in Figure 1, is shown as an integral part of a machine tool 18, and may for example comprise a programmable logic controller (PLC) and a numerical control (NC).

The machining system 1 further comprises processing circuitry and a memory. The processing circuitry and the memory may be intrinsic parts of the control system 30 of the machine tool. Alternatively, or in combination, an external processing circuitry and memory, as illustrated by the computer symbol 32, may be in communicational contact with the control system 30. The memory and processing circuitry are configured to control the cutting tool 10.

The processing circuitry may comprise one or more programmable processors, application-specific integrated circuits, field programmable gate arrays or combinations of these (not shown) adapted to execute instructions. The memory contains instructions executable by said processing circuitry, whereby the machining system 1 is operative for performing machining operations.

The part of the machining system 1 which operates the cutting tool 10, such as the control system 30, may be a group of devices, wherein functionality for performing the operations is spread out over different physical, or virtual, devices of the system. In other words, the part of the machining system 1 which executes the operations may be a cloud-solution, i.e. may be deployed as cloud computing resources that may be distributed in the machining system 1.

The instructions executable by the processing circuitry may be arranged as a computer program stored e.g. in the memory. The processing circuitry and the memory may be arranged in a sub-arrangement. The sub-arrangement may be a micro-processor and adequate software and storage therefore, a Programmable Logic Device, PLD, or other electronic component(s)/processing circuit(s) configured to perform the methods mentioned described herein.

The computer program may comprise computer readable code means, which when run in a machining system 1 causes the machining system 1 to perform the operation steps for machining. The computer program may be carried by a computer program product connectable to the processing circuitry. The computer program product may be the memory. The memory may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory. Alternatively, the computer program may be stored on a server or any other entity connected to which the machining system 1 has access. The computer program may then be downloaded from the server into the memory.

The tool body 12 in the present embodiment is an elongate element or elongate member. In the present embodiment, the tool body 12 is a cylindrical element extending along an axis 11. In the embodiment illustrated in Figure 1, the cutting tool 10 is employed for internal turning wherein material from an internal surface of the workpiece 40 is removed. Internal turning is sometimes also referred to as boring. Note, however, that the present technology is not limited to any particular form of machining.

Before the actual machining operations are performed, the tool body 12 is moved into an initial position. This initial position is a position suitable for starting the machining operations and is typically a position where the cutting edge 16 of the cutting head 14 is in close proximity of a surface of the workpiece 40 to be machined.

In prior art, it is common to have a maneuvering box 29 that is in communicational connection, e.g. by wires or wireless connections, with the control system 30. By activating different keys or other maneuvering means at the maneuvering box 29, the control system 30 can be instructed to move the cutting tool 10 into the initial position. This is manually performed, typically based on visual observations of the relative positions of the cutting edge 16 of the cutting head 14 and the surface of the workpiece 40 to be machined. Handling the maneuvering box 29 is sometimes associated with difficulties in simultaneously monitoring the cutting edge 16.

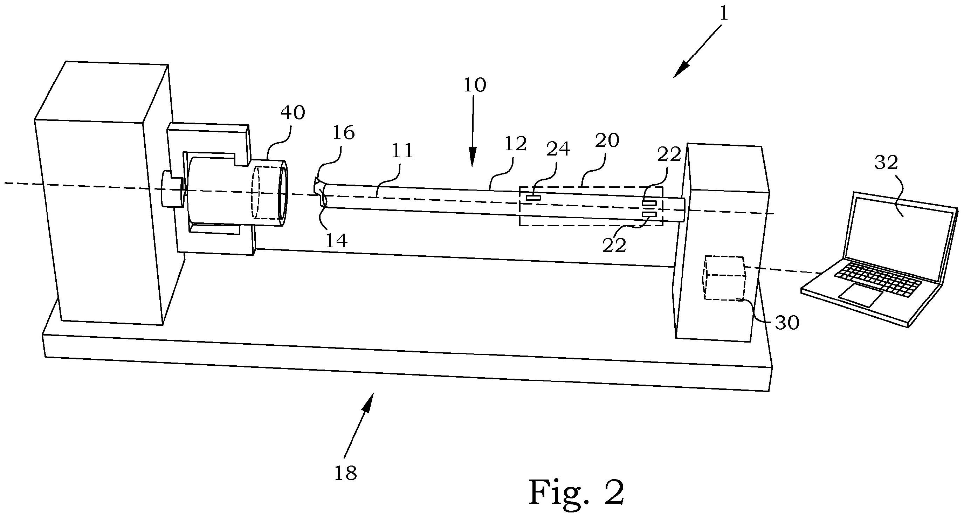

Figure 2 illustrates schematically parts of an embodiment of a machining system 1 according to the present ideas. A machine tool 18 comprises a tool body 12 of a cutting tool 10. A sensor arrangement 20 comprises at least one force sensor 22 configured for sensing deflection forces applied to the tool body 12. The force sensors 22 are typically arranged at the tool body 12 itself. Alternatively or in combination, the forces sensors 22 may also be arranged e.g. in the tool holder, i.e. the interface in the machine tool at which the cutting tool is arrangeable. In this particular embodiment, there are two force sensors 22. The force sensors 22 are in this particular embodiment strain sensors arranged at the exterior of the tool body 12. The strain sensor can be of any kind of strain sensor known by a person skilled in the art, such as a strain gauge, for example a resistive foil strain gauge or a semiconductor strain gauge. The control system 30 is configured for controlling a position of the tool body 12 in preparation for a machining operation. The control system 30 is communicationally connected to the sensor arrangement 20 for reading outputs of the force sensors 22.

Force sensors 22 of this kind may be provided at the tool body 12 also to be used during machining operations. However, such use of the force sensors 22 does not fall within the scope of the present technical ideas and will not be further discussed.

The machine tool 18 may comprise a communication interface for communicating with the external processing circuitry 32, e.g. for transmitting data from the control system 30 to the external processing circuitry 32 and/or for receiving control instructions at the control system 30 from the external processing circuitry 32. The communication interface may also be employed to transmit sensor output, for example from the force sensors 22, to the control system 30.

The signaling provided by the communication interface in the machine tool 18 may be provided via wired or wireless signals, for example via Bluetooth. The external processing circuitry 32 may have a user interface, e.g. for indicating results of movements to a human operator using the machine tool 18. The external processing circuitry 32 may for example be a personal computer or a handheld device such as a mobile phone or a tablet computer.

The existence of force sensors 22 sensing deflection forces applied to the tool body 12 enables the use of the tool body 12 itself as a maneuvering means. In particular, readings from the force sensors 22 can be used for instructing the control system 30 to move the tool body 12 according to predetermined rules. In a basic configuration, the control system 30 is configured for displacing the tool body 12 in a first direction as a response to a component in a second direction of a deflection force applied on the tool body 12 by an operator. Typically and preferably, the deflection force is applied by hand by the operator.

In other words, by using force sensors 22 on the tool body 12 itself, the operator may simply press on the tool body 12 with a component in the first direction in order to instruct the control system 30 to move the tool body in the second direction. As will be discussed more in detail further below, the first and second directions may in some embodiments be parallel, but in other embodiments transverse. Since the tool body 12 itself is used as a maneuvering means, no additional devices have to be provided close to the position around the workpiece, saving space and complexity. Furthermore, if the tool body 12 has force sensors 22 for use during machining operation, the same force sensors 22 may advantageously also be used for reaching the initial position before starting the machining operation.

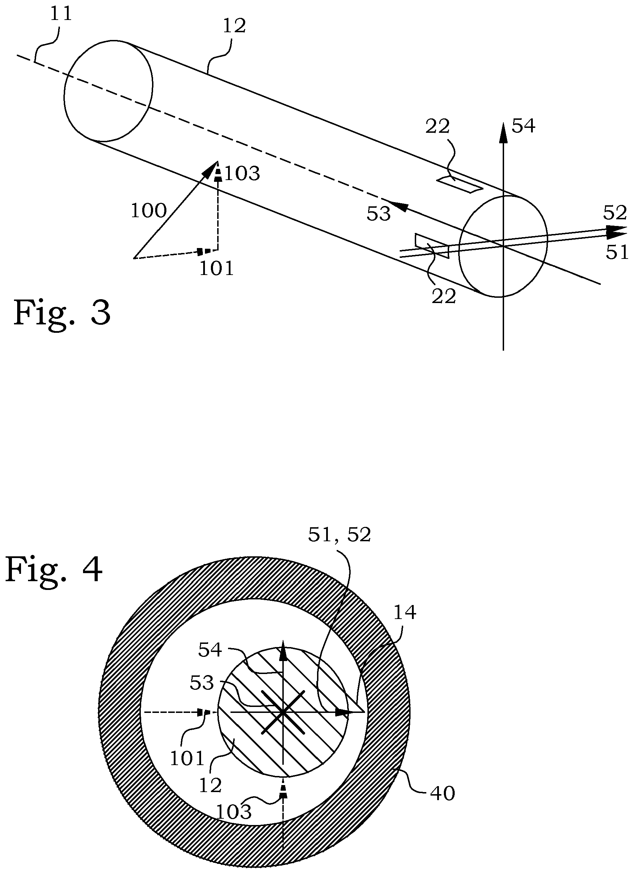

Figure 3 illustrates schematically a part of a tool body 12. A deflection force 100 is applied to the tool body 12, e.g. as applied by an operator's hand. The intension of this applied force is to move the tool body 12 in a first direction 51. The deflection force 100 can be divided into components 101, 103. The first component 101 is parallel to a second direction 52. In this particular embodiment, the first and second directions 51, 52 are parallel. The force sensors 22 detect the deflection force 100 and inform the control system 30 thereof. The control system 30 is then configured for displacing the tool body 12 in the first direction 51 as a response to the deflection force component 101 in the second direction 52.

Figure 4 illustrates schematically a cross-sectional view of a tool body 12 when placed within the interior of a cylinder workpiece 40 as a preparation for a machining operation. Also here, the first and second directions 51, 52 are parallel. This means that a deflection force component 101 applied in a radial direction with respect to the workpiece 40 will cause a displacement of the tool body 12 towards the inner surface of the workpiece 40, such that the cutting edge of the cutting head 14 approaches the intended point of engagement on the surface to be machined. In other words, in one embodiment, the second direction 52 is a radial direction relative to a rotation axis of a workpiece 40. A radial direction relative to the rotation axis of a workpiece may thus be understood as a direction along a radial line from the rotation axis that passes through the intended point of engagement between the cutting edge and the surface to be machined. A displacement of the tool body may thus be directed along such radial direction away from, or towards, the rotation axis of the workpiece.

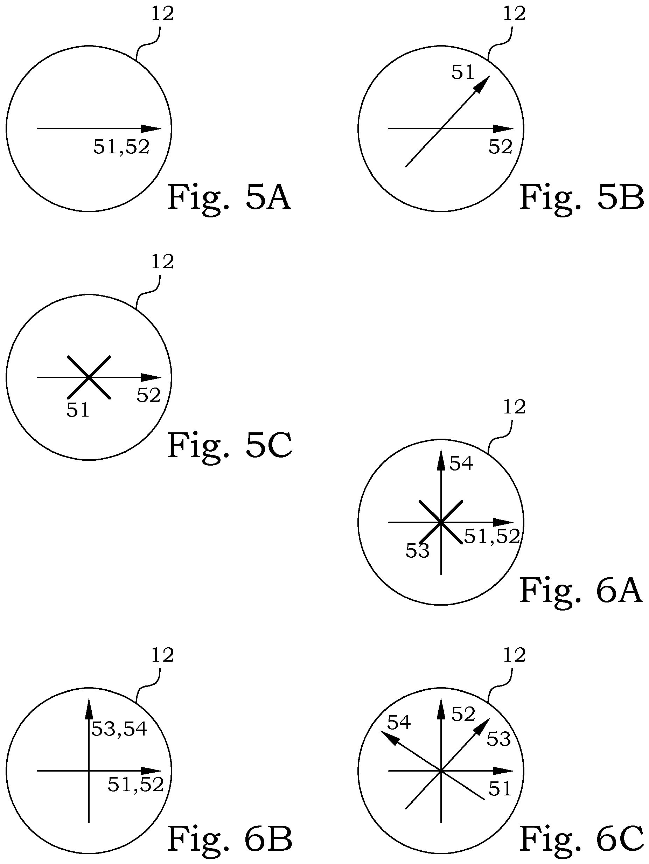

In Figure 5A, the first direction 51 and the second direction 52 are illustrated in relation to the tool body 12. In this embodiment, they are parallel. This embodiment gives a strong intuitive experience that the applied force gives the displacement. In other words, in one embodiment, the second direction 52 is parallel to the first direction 51. Also, in this embodiment, the first direction 51 is perpendicular to an axial direction of the tool body 12.

However, in certain applications, other relations between the first and second directions may be useful. Figure 5B illustrates an embodiment, where a deflection force component directed in the second direction 52 gives a displacement in the first direction 51, which here is non-parallel to the second direction. However, in this embodiment, first direction 51 is still perpendicular to an axial direction of the tool body 12.

As illustrated by Figure 5C, the directions are not limited to be perpendicular to the elongation of the tool body 12. In this embodiment, a displacement force component transverse to the tool body 12 in the second direction 52 gives rise to a displacement of the tool body 12 along its axis in the first direction 51, into the plane of the paper in Figure 5C, as indicated by the cross.

The ideas above can also be extended into more than one deflection force component and more than one displacement. Returning to Figure 3, a displacement in a third direction 53 is intended. The second displacement force component 103 is directed in a fourth direction 54. The control system can then be configured for determining the second displacement force component 103 and control the tool body 12 to move in the third direction 53. Figure 4 illustrates the same situation, but in a view along the tool body 12. Here, it is seen that in this embodiment, the fourth direction 54 is a tangential direction with respect to the workpiece 40. In other words, in one embodiment, the fourth direction is a tangential direction relative to a rotation axis of a workpiece.

A tangential direction relative to the rotation axis of a workpiece may be understood as a direction that is perpendicular to the rotation axis of the workpiece and tangential to the surface to be machined at the intended point of engagement between the cutting edge and the surface to be machined. In other words, the tangential direction relative to the workpiece may be a direction in which the surface of the work piece interacting with the cutting edge is moving during turning, when in contact with the cutting edge.

Hence, such tangential direction may be perpendicular both to the rotation axis of the workpiece and to the radial direction relative to the rotation axis of the workpiece.

In other words, in one embodiment, the control system is further configured for displacing the tool body 12 in a third direction 53, transversal with respect to the first direction 51, as a response to a component in a fourth direction 54, transversal with respect to said second direction 52, of the deflection force 100 applied on the tool body 12.

In Figure 6A, the third direction 53 and the fourth direction 54 are illustrated in relation to the tool body 12. In this embodiment, they are perpendicular. In other words, the third direction 53 is parallel to an axial direction of the tool body. This embodiment gives the possibility to move the tool body along its extension direction, for instance into a hollow workpiece for enabling inner surface machining. In this embodiment, the second 52 and fourth directions 54 are perpendicular to an axial direction of the tool body 12. Further, in this embodiment, the first 51 and third 53 directions are mutually perpendicular.

However, in certain applications, other relations between the third and fourth directions may be useful. Figure 6B illustrates an embodiment, where a deflection force component directed in the fourth direction 54 gives a displacement in the third direction 53, which here is parallel to the fourth direction. This embodiment gives a strong intuitive experience that the applied force gives the displacement in a two-dimensional plane. In this embodiment, the second and fourth directions 52, 54 are mutually perpendicular. Also in this embodiment, the second 52 and fourth directions 54 are perpendicular to an axial direction of the tool body 12. Further, in this embodiment, the first 51 and third 53 directions are mutually perpendicular.

However, other relationships between the directions are also possible, and may be adapted to the particular applications. As illustrated by Figure 6C, the component directions 52 and 54 are not limited to be perpendicular to each other. Also the displacement directions 51 and 53 may be non-perpendicular.

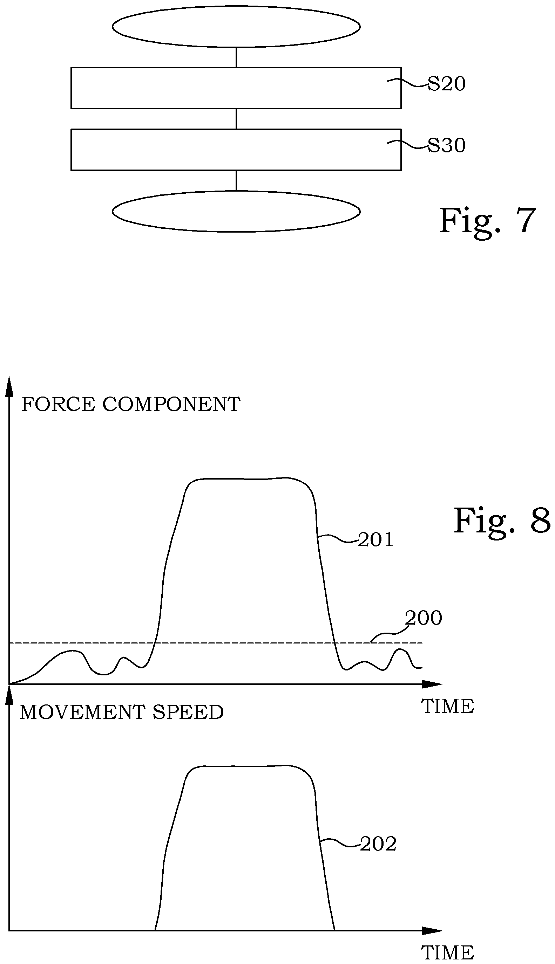

Figure 7 illustrates a flow diagram of steps of an embodiment of a method for positioning of a tool body of a machine tool in preparation for a machining operation. In step S20, outputs from at least one force sensor of a sensor arrangement configured for sensing deflection forces applied to said tool body is read. In step S30, the tool body is displaced in response to the read outputs from the at least one force sensor. The displacing, step S30, comprises displacing the tool body in a first direction as a response to a component in a second direction of a deflection force applied on the tool body by hand of an operator.

In one embodiment, the second direction is parallel to the first direction. In one embodiment, the first direction is perpendicular to an axial direction of the tool body. In one embodiment, the second direction is a radial direction relative to a rotation axis of a workpiece.

If using more than one component of the applied deflection force, the step S30 of displacing further comprises displacing the tool body in a third direction, transversal with respect to the first direction, as a response to a component in a fourth direction, transversal with respect to the second direction, of the deflection force applied on the tool body.

In one embodiment, the second and fourth directions are mutually perpendicular. In one embodiment, the second and fourth directions are perpendicular to an axial direction of the tool body. In one embodiment, the fourth direction is a tangential direction relative to a rotation axis of a workpiece. In one embodiment, the first and third directions are mutually perpendicular. In one embodiment, the third direction is parallel to an axial direction of the tool body.

The relation between the strength of the detected deflection force components and the controlled displacement can also be varied in different ways. In one simple case, a constant displacement velocity can be given once a non-zero deflection force component is determined to exist. For enabling displacements forth and back, in another embodiment, the direction of the constant displacement velocity is dependent on the direction of the non-zero deflection force component.

However, the relation can be further used. In one embodiment, a displacement velocity of a respective one of the displacements is a predetermined function of a magnitude of a respective deflection force component strength. In a typical case, the predetermined function is a monotonic function, which means that a same or higher displacement velocity is achieved when a higher deflection force is detected.

One alternative is to use a proportionality factor. In other words, the displacement velocity of a respective one of the displacements is proportional to the magnitude of the respective deflection force component strength. A double deflection force then gives a double displacement velocity.

The predetermined function may also be a step function, where force components under a certain level do not result in any movement at all. When the force component rises above that level, it results in a movement with a constant displacement velocity regardless of how much the level is exceeded. C.f. the use of a threshold value, described here below.

However, to have a direct proportionality may give rise to unwanted behaviors. If the sensors are very sensitive, small unintentional touches of the tool body or even vibrations, may be detected as a non-zero deflection force component and thereby give rise to a displacement. The result may be that the tool body is constantly moved back and forth small distances, as a result of unintentional conditions.

Figure 8 is a diagram illustrating a fictive situation of a tool body. The upper part of the diagram illustrates a force component 201 as detected by a sensor at the tool body. In the initial period, only small forces are detected, e.g. as resulting from vibrations. Then an intentional deflection force is applied during a certain time, before the situation returns to a stand-by situation again. By introducing a threshold 200, unintentional movements may be avoided. Only force components over the threshold 200 is then used for causing displacements. In the bottom part of the figure, the movement speed of the displacement is illustrated. Here it can be seen that the displacements are only performed when the intentional forces are applied.

In other words, in one embodiment, the displacements are performed if the magnitude of the respective deflection force component strength exceeds a predetermined threshold.

In the embodiment illustrated in Figure 8, the displacement velocity of a respective one of the displacements is proportional to a difference between the magnitude of the respective deflection force component strength and the predetermined threshold. This can of course be performed differently in other embodiments.

Tool bodies in many machining systems may also have other types of sensors mounted thereto. Returning to Figure 2, it is seen that the sensor arrangement 20 in that embodiment also comprises an accelerometer 24. By such being able to not only measure the strength of a deflection force, but also determine the fluctuations thereof by an accelerometer 24, further controlling opportunities can be given.

For instance, short force applications, e.g. tapping on the tool body, will not in general give rise to any considerable displacements by means of the force detection procedures described above. However, by detecting tapping patterns by means of accelerometers, different sequences can be detected. By configuring the control system 30 to recognize certain sequences as coding of predetermined instructions, further functions can be obtained.

In one option, the detection of a certain sequence of tapping may cause the control system to displace the tool body by a predetermined distance in a predetermined direction. This could for instance be used for fine adjustments of the positions, where feedback time delays and observation failures may pose problems for the operator. The force detection could then for instance be used for placing the tool body in an approximate position, and tapping codes on the tool body could then serve for moving the tool body by small, predetermined steps closer to the intended final position.

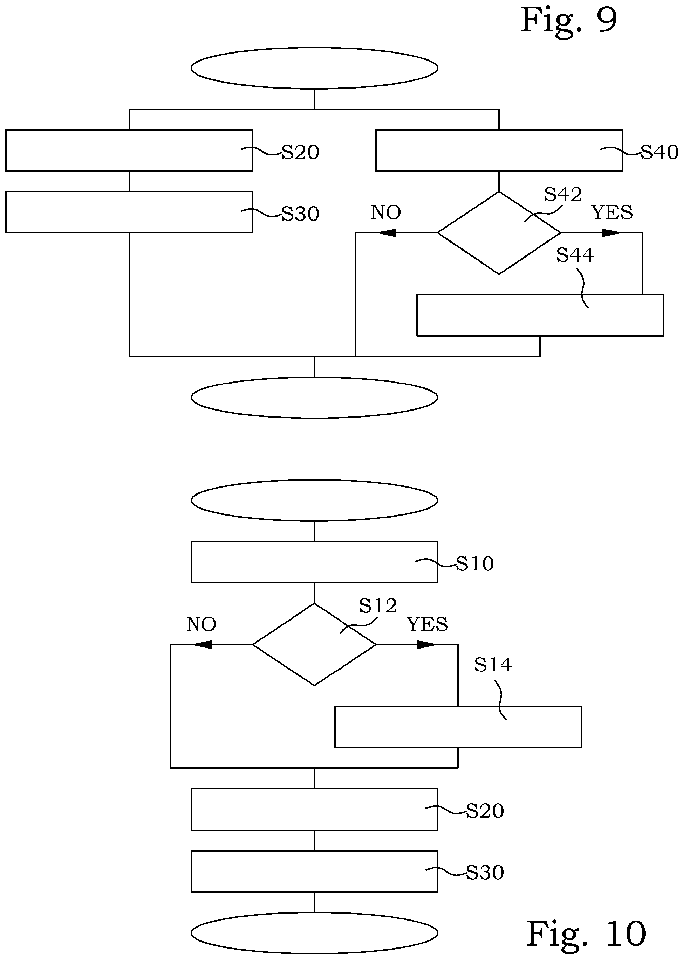

Figure 9 is a flow diagram illustrating steps of an embodiment of a method for positioning of a tool body of a machine tool in preparation for a machining operation.

Steps S20 and S30 are similar to what was described in connection with Figure 7. In step S40, outputs from at least one accelerometer of the sensor arrangement are read. The accelerometers are configured for sensing acceleration applied to the tool body. In step S42, it is deduced from the read outputs from the accelerometer(s) if a predetermined pattern of a sequence of tapping on the tool body is present. If that is the situation, the process continues to step S44, in which tool body is displaced in predetermined steps in response to the deduced predetermined pattern of the sequence of tapping.

With reference to Figure 2, in one embodiment, the machine tool 18 is such that the sensor arrangement 20 further comprises at least one accelerometer 24 configured for sensing acceleration applied to the tool body 12. The control system 30 is communicationally connected to the sensor arrangement 20 for reading outputs of the accelerometer(s) 24. The control system 30 is further configured for deducing, from the read outputs from the accelerometer(s) 24, if a predetermined pattern of a sequence of tapping on the tool body 12 is present. The control system 30 is further configured for displacing the tool body 12 in predetermined steps in response to the deduced predetermined pattern of the sequence of tapping.

More elaborate coded instruction schemes may also be applied. Figure 10 is a flow diagram illustrating steps of another embodiment of a method for positioning of a tool body of a machine tool in preparation for a machining operation. In step S10, outputs from at least one accelerometer of the sensor arrangement are read. The accelerometers are configured for sensing acceleration applied to the tool body. In step S12, it is deduced from the read outputs from the accelerometer(s) if a predetermined pattern of a sequence of tapping on the tool body is present. If so, the process continues to step S14, in which the predetermined function, by which the displacements are to be made, is adapted in response to the deduced predetermined pattern of the sequence of tapping. For instance, a size of a step function can be altered. Steps S20 and S30 are similar to what was described in connection with Figure 7 with use an adapted function determining the relation between deflection force and displacement.

With reference to Figure 2, in one embodiment, the machine tool 18 is such that the sensor arrangement 20 further comprises at least one accelerometer 24 configured for sensing acceleration applied to the tool body 12. The control system 30 is communicationally connected to the sensor arrangement 20 for reading outputs of the accelerometer(s). The control system 30 is further configured for deducing, from the read outputs from the accelerometer(s) 24, if a predetermined pattern of a sequence of tapping on the tool body 12 is present. The control system 30 is further configured for adapting a predetermined displacement velocity function, being a function of a magnitude of a respective deflection force component strength, in response to the deduced predetermined pattern of the sequence of tapping.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A method for positioning of a tool body (12) of a machine tool (18) in preparation for a machining operation, comprising the steps of:
- reading (S20) outputs from at least one force sensor (22) of a sensor arrangement (20) configured for sensing deflection forces applied to said tool body (12); and
- displacing (S30) said tool body (12) in response to said read outputs from said at least one force sensor (22);
wherein said displacing (S30) comprises displacing said tool body (12) in a first direction (51) as a response to a component (101) in a second direction (52) of a deflection force (100) applied on said tool body (12) by an operator.

2. The method according to claim 1, **characterized in that** said second direction (52) is parallel to said first direction (51).

3. The method according to claim 1 or 2, **characterized in that** said first direction (51) is perpendicular to an axial direction (11) of said tool body (12).

4. The method according to any one of the claims 1 to 3, **characterized in that** said second direction (52) is a radial direction relative to a rotation axis of a workpiece (40).

5. The method according to any one of the claims 1 to 4, **characterized in that** said displacing (S30) further comprises displacing said tool body (12) in a third direction (53), transversal with respect to said first direction (51), as a response to a component (103) in a fourth direction (54), transversal with respect to said second direction (52), of said deflection force (100) applied on said tool body (12).

6. The method according to claim 5, **characterized in that** said second (52) and fourth (54) directions are mutually perpendicular.

7. The method according to claim 5 or 6, **characterized in that** said second (52) and fourth (54) directions are perpendicular to an axial direction (11) of said tool body (12).

8. The method according to any one of the claims 5 to 7, **characterized in that** said fourth direction (54) is a tangential direction relative to a rotation axis of a workpiece (40).

9. The method according to any one of the claims 5 to 8, **characterized in that** said first (51) and third (53) directions are mutually perpendicular.

10. The method according to any one of the claims 5 to 9, **characterized in that** said third direction (53) is parallel to an axial direction (11) of said tool body (12).

11. The method according to any one of the claims 1 to 10, **characterized in that** a displacement velocity of a respective one of said displacements is a predetermined function of a magnitude of a respective deflection force component strength.

12. The method according to any one of the claims 1 to 11, **characterized in that** said displacements are performed if said magnitude of said respective deflection force component strength exceeds a predetermined threshold (200).

13. The method according to claim 12, **characterized in that** said displacement velocity of a respective one of said displacements is proportional to a difference between said magnitude of said respective deflection force component strength and said predetermined threshold (200).

14. The method according to any one of the claims 1 to 13, **characterized by** comprising the further step of:
- reading (S40) outputs from at least one accelerometer (24) of said sensor arrangement (20) configured for sensing acceleration applied to said tool body (12);
- deducing (S42) from said read outputs from said at least one accelerometer (24) if a predetermined pattern of a sequence of tapping on said tool body (12) is present; and
- displacing (S44) said tool body (12) in predetermined steps in response to said deduced predetermined pattern of said sequence of tapping.

15. The method according to claim 11, **characterized by** comprising the further step of:
- reading (S10) outputs from at least one accelerometer (24) of said sensor arrangement (20) configured for sensing acceleration applied to said tool body (12);
- deducing (S12) from said read outputs from said at least one accelerometer (24) if a predetermined pattern of a sequence of tapping on said tool body (12) is present; and
- adapting (S14) said predetermined function in response to said deduced predetermined pattern of said sequence of tapping.

16. A machine tool (18), comprising:
- a tool body (12) of a cutting tool (10);
- a sensor arrangement (20), comprising at least one force sensor (22) configured for sensing deflection forces applied to said tool body (12); and
- a control system (30) configured for controlling a position of said tool body (12) in preparation for a machining operation;
wherein said control system (30) being communicationally connected to said sensor arrangement (20) for reading outputs of said at least one force sensor (22);
wherein said control system (30) being configured for displacing said tool body (12) in a first direction as a response to a component (101) in a second direction (52) of a deflection force (100) applied on said tool body (12) by an operator.

17. The machine tool according to claim 16, **characterized in that** said control system (30) being further configured for displacing said tool body (12) in a third direction (53), transversal with respect to said first direction (51), as a response to a component (103) in a fourth direction (54), transversal with respect to said second direction (52), of said deflection force (100) applied on said tool body (12).

18. The machine tool according to claim 16 or 17, **characterized in that** said sensor arrangement (20) further comprises at least one accelerometer (24) configured for sensing acceleration applied to said tool body (12);
wherein said control system (30) being communicationally connected to said sensor arrangement (20) for reading outputs of said at least one accelerometer (24);
wherein said control system (30) being further configured for deducing, from said read outputs from said at least one accelerometer (24), if a predetermined pattern of a sequence of tapping on said tool body (12) is present; and
wherein said control system (30) being further configured for displacing said tool body (12) in predetermined steps in response to said deduced predetermined pattern of said sequence of tapping.

19. The machine tool according to claim 16 or 17, **characterized in that** said sensor arrangement (20) further comprises at least one accelerometer (24) configured for sensing acceleration applied to said tool body (12);
wherein said control system (30) being communicationally connected to said sensor arrangement (20) for reading outputs of said at least one accelerometer (24);
wherein said control system (30) being further configured for deducing, from said read outputs from said at least one accelerometer (24), if a predetermined pattern of a sequence of tapping on said tool body (12) is present; and
wherein said control system (30) being further configured for adapting a predetermined displacement velocity function, being a function of a magnitude of a respective deflection force component strength, in response to said deduced predetermined pattern of said sequence of tapping.
